# FASCICULE DE BREVET EUROPEEN

(11) **EP 2 136 073 B1**
(45) Date de publication et mention de la délivrance du brevet: **23.08.2017**
(21) Numéro de dépôt: 09162751.3
(22) Date de dépôt: 16.06.2009
(51) Int. Cl.: F03B 13/10, F04D 29/052, F04D 29/042, F01D 25/16

(54) **Système de paliers pour ensemble de turbomachines**
Lagerung für einen Turbomaschinensatz
Bearing system for turbomachine assembly

(30) Priorité: 17.06.2008 FR 0853977
(43) Date de publication de la demande: 23.12.2009
(73) Titulaire: SNECMA, 75015 Paris (FR)
(72) Inventeur: Begin, Valérie, 27200 Vernon (FR); Boudehen, Frédéric, 76600 Le Havre (FR); Danguy, François, 27510 Tourny (FR); Frocot, Manuel, 27200 Vernon (FR)
(74) Mandataire: Intès, Didier Gérard André

(56) Documents cités:
- EP-A- 0 355 796
- EP-A- 0 784 156
- US-A- 4 740 711
- US-A- 5 591 016
- US-A- 5 803 708
- US-A1- 2006 186 671
- "MODERN SUBMERSIBLE PUMPS FOR CRYOGENIC LIQUIDS" WORLD PUMPS, ELSEVIER, OXFORD, GB, no. 328, 1 janvier 1994 (1994-01-01), pages 23-25, XP000419131 ISSN: 0262-1762

## Description

La présente invention concerne une turbomachine agencée avec un rotor et un stator, et plus précisément une amélioration dans celle-ci des moyens de maintien en position du rotor par rapport au stator.

Cette turbomachine comporte une partie fluidique et une partie électrique qui coopèrent pour permettre un échange d'énergie entre un fluide en écoulement à travers la machine et un circuit électrique.

Cet échange peut se faire dans les deux sens : Ainsi, une telle turbomachine peut être un compresseur, avec comme partie électrique un moteur électrique qui entraine une partie fluidique telle qu'une pompe ; elle peut être aussi un générateur électrique, la partie fluidique étant une turbine entrainant comme partie électrique un générateur électrique, par exemple un alternateur.

Ce type de turbomachine est notamment utilisé, sous forme de turbine de détente ou de pompe haute pression, dans les industries du GNL (gaz naturel liquéfié) et du GPL (gaz de pétrole liquéfié). Le fluide transitant à travers la turbomachine est alors le gaz naturel (méthane, éthane), les gaz de pétrole liquéfiés (butane, propane), ou un mélange de ceux-ci dit mix-réfrigérant (pouvant comporter en outre une part limitée de produits plus lourds).

Un objectif permanent lors de la conception d'une telle machine est de maximiser la durée de vie et les performances de celle-ci.

Pour cela, on s'efforce notamment de réduire le frottement en rotation du rotor. Dans ce but, le choix des moyens de maintien en position du rotor par rapport au stator, que ce soit radialement ou axialement, est un choix essentiel. On notera que la plupart du temps, le rotor est agencé avec un arbre disposé verticalement, et une première fonction des moyens de maintien est notamment de supporter le poids du rotor, en particulier à l'arrêt et à faible vitesse.

Différents modes de réalisation de moyens de maintien utilisables dans une turbomachine sont divulgués par la demande de brevet US 2006/0186671.

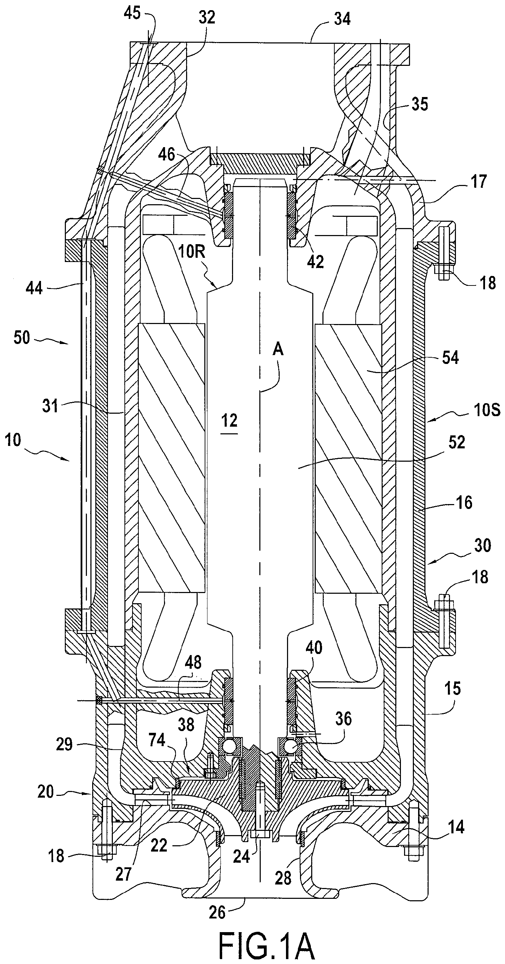

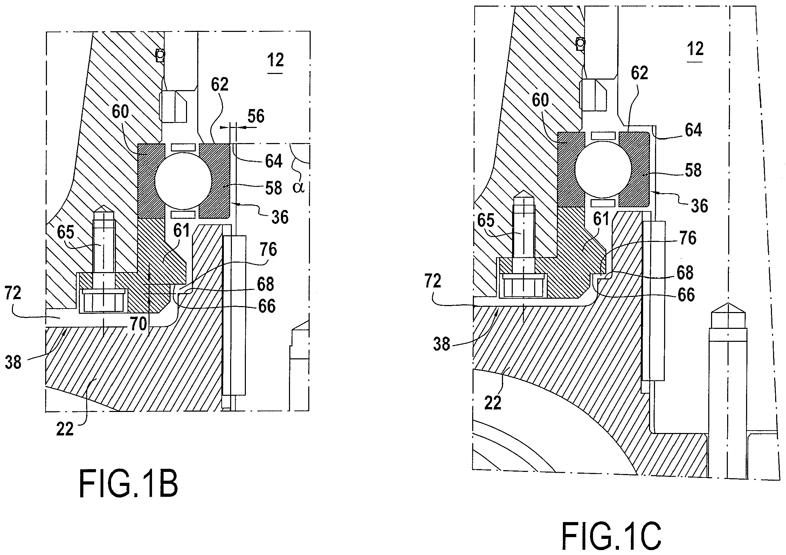

Dans un premier mode de réalisation (figure 1), il est divulgué une génératrice à turbine, dont le maintien en position radiale est assuré des roulements. Les roulements à billes présentent toutefois l'inconvénient d'impliquer des contacts mécaniques et donc des frottements entre des surfaces en regard, ce qui entraîne une usure et une consommation d'énergie, en particulier à des vitesses de rotation élevées ; ils limitent de plus la vitesse de rotation maximale admissible

Le maintien en position axiale est quant à lui assuré à faible vitesse par un des roulements à billes cités précédemment, et à vitesse élevée par un dispositif d'équilibrage axial agencé au dos d'une roue à aubes.

Le roulement à billes indiqué précédemment comporte une bague externe montée coulissante par rapport au stator, dans un intervalle limité. A faible vitesse, cette bague externe est bloquée en butée à une extrémité de cet intervalle, le roulement à billes assurant grâce à cela le blocage axial du rotor.

A plus haute vitesse, le rotor est repoussé vers le haut par la pression de fluide sur les roues à aubes, et le dispositif d'équilibrage axial se substitue au roulement à billes pour maintenir le rotor en position sensiblement fixe, à l'intérieur de l'intervalle cité précédemment. Le dispositif d'équilibrage axial est intégré à la première roue à aubes et comporte une chambre d'équilibrage disposée sur la face arrière de cette roue à aubes, et un ajutage présentant un jeu axial, servant à réguler la pression dans la chambre d'équilibrage pour assurer le maintien en position axiale du rotor.

L'inconvénient de ce mode de réalisation, est que la bague interne du roulement à billes (solidaire du rotor) et les billes sont entraînées en rotation avec le mouvement du rotor, entraînant frottements et usure dans le palier à roulement. De ce fait la durée de vie de cette partie du générateur électrique est limitée.

Pour remédier à ces inconvénients, la demande de brevet US 2006/0186671 présente un autre mode de réalisation de génératrice électrique à turbine (figure 7).

Dans ce mode de réalisation, pour le maintien radial du rotor, la génératrice comporte des paliers à roulement à billes débrayables. Ces roulements à billes sont utilisés à vitesse faible ; ils sont doublés par des paliers hydrostatiques, qui se substituent à eux à vitesse élevée. Ces paliers hydrostatiques utilisent la pression du fluide du circuit principal de la turbomachine et assurent le maintien en position radiale du rotor dès que la vitesse de rotation (et donc la pression de fluide) atteint une valeur suffisante. (Dans ce document, par 'circuit principal' de la turbomachine, on désigne l'ensemble des circuits permettant la circulation du fluide de la partie fluidique de la turbomachine).

Pour le maintien en position axiale du rotor, à l'arrêt et à faible vitesse, l'un des roulements à billes est en butée sur une portée conique de l'arbre du rotor, et assure ainsi le soutien de ce dernier dans le sens vertical.

A plus haute vitesse, le rotor se soulève légèrement sous l'effet de la pression du fluide dans les roues à aubes ; son maintien en position est alors assuré par un dispositif d'équilibrage axial. Les roulements à billes sont alors débrayés par la translation du rotor, qui aménage des jeux sur les portées coniques de l'arbre du rotor au droit des roulements à billes : Le roulement bas est débrayé par la translation du rotor (débrayage du cône), alors que pour le roulement haut, c'est la montée en pression du fluide qui pousse sur le dispositif intégrant le roulement pour débrayer le cône.

Cet agencement a l'inconvénient d'être compliqué, mais surtout, manque de fiabilité. En effet, le débrayage des roulements à billes se fait grâce à la translation du rotor, qui est de très faible amplitude. En pratique, comme l'utilisation d'un arbre de fort diamètre est exclue, la conicité de cette portée reste faible, ce qui entraine un manque de fiabilité lors du débrayage de ces paliers et des risques forts d'interaction en fonctionnement entre les roulements et les paliers hydrostatiques.

En outre, le doublement des moyens de maintien radial (roulements à billes doublés par des paliers hydrostatiques) conduit à un alourdissement et une augmentation du volume de la machine.

Un premier objectif de l'invention est de remédier aux inconvénients cités précédemment en proposant une turbomachine agencée avec un rotor et un stator, comportant une partie fluidique apte à permettre un échange d'énergie entre un fluide la traversant et le rotor, comprenant notamment au moins une roue à aubes montée sur un arbre du rotor, une partie électrique apte à convertir de l'énergie électrique en travail ou inversement ; des moyens de positionnement radial assurant le positionnement radial du rotor ; et un dispositif d'équilibrage axial sans contact, agencé sur ladite roue à aubes, assurant l'équilibrage axial du rotor à vitesse élevée ; turbomachine qui consomme peu de fluide et présente un bon rendement volumétrique, qui soit relativement compacte, qui ait une durée de vie élevée avec une usure faible des interfaces de maintien en position du rotor, et qui permette le fonctionnement à des vitesses élevées.

Cet objectif est atteint grâce au fait que la turbomachine comporte une butée axiale distincte des moyens de positionnement radial (ou de sustentation radiale), assurant l'équilibrage axial du rotor à faible vitesse, et sans contact à vitesse élevée ; et que les moyens de positionnement radial sont constitués uniquement par des paliers hydrostatiques, la turbomachine comportant des circuits d'alimentation des paliers hydrostatiques aptes à relier ces paliers à une source de fluide sous pression.

Ces circuits d'alimentation peuvent être partiellement ou totalement distincts du circuit de fluide principal de la turbomachine.

Dans cette turbomachine, le maintien en position axiale et le maintien en position radiale sont assurés par des moyens distincts, la butée axiale étant distincte des moyens de positionnement radial. Grâce à cela, une solution technique performante peut être utilisée pour réaliser respectivement ces deux types de maintien, permettant ainsi une optimisation de la turbomachine : une butée axiale d'une part, complétée par un dispositif d'équilibrage axial sans contact pour les vitesses élevées, et des paliers hydrostatiques pour le maintien radial.

On notera tout d'abord que cette turbomachine est prévue pour être disposée avec l'arbre du rotor vertical ou oblique, mais pas horizontal. En effet la gravité agissant sur le rotor constitue la force de rappel qui limite les déplacements axiaux du rotor vers le haut, et participe ainsi à son maintien en position axial.

Les mouvements vers le bas dans la direction axiale sont quant à eux limités par la butée axiale. Celle-ci supporte le poids du rotor à l'arrêt et à faible vitesse. Avantageusement, comme la butée axiale n'a pas de fonction de maintien en position radiale, elle peut être dimensionnée à une taille réduite. Etant sans contact à vitesse élevée (au dessus d'une vitesse prédéterminée), la butée axiale ne perturbe pas le fonctionnement du rotor à haute vitesse, ce qui permet ainsi avantageusement d'étendre le domaine de fonctionnement du rotor jusqu'à des vitesses élevées. La butée axiale est distincte du dispositif d'équilibrage axial.

A vitesse élevée, le maintien en position axiale est assuré par le dispositif d'équilibrage axial. Avantageusement, le dispositif d'équilibrage axial est intégré à la ou aux roue(s) à aubes, et fonctionne avec le fluide traversant la partie fluidique, ce qui permet d'éviter une consommation de fluide inutile. Cette disposition intégrée contribue au rendement volumétrique élevé de la turbomachine.

Le maintien en position radiale est assuré avantageusement par un dispositif unique, à savoir des paliers hydrostatiques. Aucun roulement à bille ou autre dispositif de maintien avec contact n'est impliqué dans le maintien en position radiale.

Dès qu'ils sont mis sous pression de fluide, les paliers hydrostatiques placent le rotor dans une position dans laquelle il présente un très léger jeu (quelques dizaines de microns) entre le rotor et les paliers. Ces paliers permettent ainsi d'obtenir des pertes par frottement extrêmement faibles, et cela sans nécessiter le déplacement d'organes mécaniques entre le rotor et d'autres pièces non solidaires du rotor.

En outre, avec leurs circuits d'alimentation propres, qui leur permettent d'être alimentés à l'arrêt ou à basse vitesse, les paliers hydrostatiques peuvent être utilisés pour le positionnement radial du rotor quelle que soit la vitesse de rotation de celui-ci, contrairement aux paliers hydrostatiques doublant des roulements à billes de l'exemple antérieur cité. Les paliers hydrostatiques assurent ainsi le maintien en position radiale du rotor à tous les régimes de la turbomachine.

Plus particulièrement dans le cas d'utilisation de la turbomachine avec un fluide à basse ou très basse température (cas des GNL/GPL/MR), l'utilisation d'une source de fluide sous pression extérieure, avec des circuits d'alimentation pour les paliers hydrostatiques, permet d'assurer en priorité la mise en froid des zones à très faible jeu situées au coeur de la machine et d'avoir un contrôle précis de la température au niveau des paliers. Les jeux radiaux dans le palier étant très faibles, il existe souvent un risque de blocage d'un palier hydrostatique lors de la chute de température au démarrage. La maîtrise de la température du fluide d'alimentation des paliers permet de maîtriser et réduire ce risque.

Grâce à l'invention, les interfaces de maintien en position du rotor sont sans contact à vitesse élevée, au dessus d'une vitesse prédéterminée. (Le terme 'avec contact' signifie ici qu'il y a contact mécanique entre deux solides). Ces interfaces sont les interfaces mécaniques entre le rotor et le reste de la machine, au niveau des moyens de positionnement radial, de la butée axiale, et du dispositif d'équilibrage axial.

Ainsi à haute vitesse, un film de fluide sépare le rotor des parties de la machine non solidaires du rotor ; il n'y a pas de contact mécanique entre une surface du rotor et une surface d'une autre pièce non-solidaire du rotor. Grâce à cela, les pertes par frottement et l'usure sont minimisés.

Selon un mode de réalisation, la butée axiale comporte des portées formant un angle supérieur à 10° par rapport à l'axe du rotor, et de préférence voisin de 90°. De la sorte, tout risque de blocage de la butée axiale et d'interaction entre la butée axiale et les paliers hydrostatiques est écarté.

Deux modes de réalisation peuvent notamment être envisagés pour la butée axiale.

Selon un premier mode de réalisation, la butée axiale est une butée hydrostatique. Comme les paliers hydrostatiques, ce mode de réalisation s'avère attractif pour assurer un positionnement précis, et cela de manière très durable. Les circuits d'alimentation des paliers hydrostatiques et de la butée hydrostatique peuvent être partiellement communs, les surfaces fonctionnelles (les portées) restant cependant distinctes.

Selon un second mode de réalisation, la butée axiale est un roulement à billes. Ce roulement à billes est prévu pour être sans contact aux hautes vitesses de rotation.

Pour réaliser cela, par exemple le roulement à billes comporte une bague interne présentant une surface radialement intérieure sensiblement cylindrique, et un jeu est formé entre cette surface et la surface extérieure du rotor. Du fait de ce jeu radial, aucune pièce du roulement à billes n'est entraînée en rotation lors de la rotation du rotor. Grâce à cela, l'usure et le risque de dysfonctionnement du rotor sont minimisés. En revanche, les surfaces aux extrémités axiales du roulement sont amenées à transmettre des efforts pour assurer la fonction de butée axiale.

Selon un mode de réalisation, la turbomachine comporte en outre un filtre en amont de l'alimentation des paliers hydrostatiques. Grâce à celui-ci, les particules de diamètre important susceptibles d'endommager les paliers hydrostatiques sont éliminées en amont de ceux-ci, augmentant ainsi leur durée de vie.

Selon un mode de réalisation, à vitesse élevée, le dispositif d'équilibrage axial utilise uniquement du fluide traversant la ou les roues à aubes pour assurer le maintien en position axiale du rotor. Ainsi le rendement volumétrique de la turbomachine est optimisé, et la structure du dispositif d'équilibrage axial reste simple.

Un second objectif de l'invention est de proposer un dispositif de turbomachine comportant une turbomachine du type cité en préambule, présentant en particulier à haute vitesse un rendement volumétrique élevé, une durée de vie élevée, et comprenant des moyens internes pour l'alimentation des paliers hydrostatiques de la turbomachine en fluide sous pression.

Cet objectif est atteint grâce au fait que le dispositif comporte une turbomachine telle que présentée précédemment, apte à être reliée à une source de fluide sous pression, et des moyens pour sélectionner pour l'alimentation des paliers hydrostatiques soit une source externe de fluide sous pression, soit un circuit de fluide principal de la turbomachine.

Ainsi, grâce à la possibilité de sélection de la source de fluide sous pression, il est possible de minimiser la consommation de fluide la plus pénalisante (c'est-à-dire en pratique, de minimiser le temps de fonctionnement de la source de fluide externe). La source de fluide sous pression peut être soit un réservoir de fluide, avec un compresseur apte à comprimer le fluide sous la pression requise. Elle peut être également une capacité de fluide, sensiblement pleine de fluide sous pression à l'arrêt, apte à fournir une quantité donnée de fluide à la pression requise pour démarrer la turbomachine ; la capacité étant à nouveau remplie dès que la turbomachine est démarrée.

Grâce au choix optimisé de la source de fluide sous pression pour les paliers hydrostatiques, le rendement énergétique global du dispositif de turbomachine est optimisé.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
Les figures 1A et 2A sont des vues en coupe axiale d'une turbomachine selon deux modes de réalisation de l'invention, pour lesquels la butée axiale est respectivement une butée à roulement à billes et une butée hydrostatique ;
les figures 1B, 1C présentent des coupes axiales de la turbomachine du premier mode de réalisation au voisinage de la butée axiale et du dispositif d'équilibrage axial, respectivement à basse et haute vitesse ;
les figures 2B, 2C présentent des coupes axiales de la turbomachine du second mode de réalisation au voisinage de la butée axiale et du dispositif d'équilibrage axial, respectivement à basse et haute vitesse ; et
les figures 3A et 3B représentent de manière schématique deux dispositifs de turbomachine conformes à l'invention, comprenant respectivement une génératrice électrique à turbine, et une pompe électrique.

Lorsqu'un élément apparaît sur plusieurs figures, il conserve la même référence sur les différentes figures, et est décrit en relation avec la première figure sur laquelle il apparaît.

En faisant référence à la figure 1, une turbomachine selon l'invention va maintenant être décrite.

Cette turbomachine 10 est une génératrice électrique, entraînée par une turbine. Elle se compose d'une partie fluidique 20, qui est une turbine, et d'une partie électrique 50, qui est un générateur électrique.

La turbomachine 10 est agencée sous la forme d'un rotor 10R, tournant autour de son arbre 12 dans un stator 10S.

Le stator 10S se compose essentiellement d'un carter 30 en quatre parties 14, 15, 16, 17. Ces parties sont fixes et fixées entre elles par des vis 18. Le stator comporte également la partie statorique 54 fixe du générateur électrique.

Le rotor 10R se compose essentiellement d'une roue à aubes 22, fixée à une extrémité de l'arbre 12 par une vis 24, de l'arbre de rotor 12 lui-même, et de la partie rotorique 52 du générateur électrique 50 (partie centrale de plus fort diamètre sur l'arbre 12 sur la figure 1, non détaillée sur la figure).

Le fonctionnement de la turbomachine 10 est le suivant.

Le fluide sous pression pénètre dans la turbomachine 10 par un orifice 34, percé dans la partie de carter 17 dans l'axe de l'arbre 12.

Il est guidé par le passage 32 du carter 17, le passage 31 du carter 16, le passage 29 du carter 15, et le passage intégré 27 (aubes intégrées dans le carter 14 en amont de la roue) du carter 14 jusqu'à la roue à aubes 22, qu'il traverse en passant entre les aubes et entraîne en rotation. Le rotor 10R est ainsi mis en rotation sous l'action du fluide.

Le générateur électrique 50, avec sa partie rotorique 52 sur le rotor et sa partie statorique 54 est un composant connu de turbomachine. Sous l'effet de la rotation du rotor 10R, il délivre en sortie un courant électrique, transmis par des câbles non représentés passant dans le passage 35.

Après avoir traversé la roue à aubes 22, le fluide passe par un passage 28 du carter 14 qui le guide jusqu'à un orifice de sortie 26 aménagé dans la partie de carter 14, à l'extrémité de la turbomachine opposée à l'orifice d'entrée 34.

Le maintien en position (axiale et radiale) du rotor 10R est assuré de la manière suivante :
Il faut noter tout d'abord que la turbomachine 10 est prévue pour fonctionner placée verticalement, c'est-à-dire avec l'axe du rotor en direction verticale.

Pour supporter le poids du rotor, qui s'exerce donc suivant l'axe A de l'arbre 12 du rotor, la turbomachine comporte une butée axiale constituée par un palier à rotation 36, qui est un roulement à billes. A l'arrêt et aux faibles vitesses (de rotation) du rotor, ce roulement à billes 36 supporte le poids du rotor 10R. Lorsque la vitesse de rotation du rotor s'élève, le rotor 10R se soulève légèrement et sa position est alors régulée par un dispositif d'équilibrage axial 38 aménagé sur l'arrière de la roue à aubes 22. L'agencement de ces éléments sera détaillé en relation avec les figures 1B et 1C.

Le positionnement radial du rotor, pour sa part, est assuré par les paliers hydrostatiques 40 et 42. Ces paliers hydrostatiques disposent de circuits d'alimentation 44, 46, 48 distincts du circuit de fluide principal 29, 31. L'orifice d'alimentation 45 de ces circuits est prévu pour être raccordé à une source de fluide sous pression. La turbomachine 10 peut comporter en outre un filtre (non représenté), disposé en amont des paliers hydrostatiques, et prévu pour éliminer les particules de trop gros diamètre qui pourraient se trouver dans le fluide.

De manière connue en soi, ces paliers hydrostatiques 40, 42 comportent chacun une partie en forme de manchon enserrant, avec un jeu très faible, une portée cylindrique de l'arbre 12. Le fluide d'alimentation des paliers est injecté entre les parties en forme de manchon et l'arbre 12 de manière à former un film mince, qui sépare l'arbre du palier et permet la rotation de l'arbre sans frottement mécanique, et maintient l'arbre 12 dans la position radiale souhaitée.

Le fonctionnement des moyens de maintien axiaux va maintenant être détaillé en relation avec les figures 1B et 1C. La figure 1B, représente le rotor dans la position qu'il occupe aux faibles vitesses de rotation, alors que la figure 1C, le représente dans la position qu'il occupe aux hautes vitesses de rotation. On note tout d'abord l'existence d'un jeu interne 56 entre la bague interne 58 du roulement à billes 36 et l'arbre 12. Du fait de ce jeu 56, le roulement 36 n'est entraîné en rotation que lorsqu'il supporte le poids du rotor 10R. Une surface supérieure 62 de la bague 58 est alors en contact avec un épaulement 64 de l'arbre 12. Les surfaces fonctionnelles ou portées de la butée axiale 36 forment un angle α de 90° par rapport à l'axe A du rotor 10R.

A l'extérieur du roulement 36, la bague extérieure 60 transmet le poids du rotor sur la couronne 61 solidaire de la partie de carter 15 et fixée à celle-ci par des vis 65.

A vitesse de rotation élevée (figure 1C), le rotor 10R remonte suivant l'axe A. La surface 62 de la bague 58 n'est plus en contact avec l'épaulement 64 de l'arbre 12. Le roulement à billes 36 n'est pas entraîné en rotation et ne joue aucun rôle.

Le dispositif d'équilibrage axial 38 est présenté sur la partie inférieure des figures 1B et 1C. Une chambre 72 est formée à l'arrière de la roue à aubes 22, du côté du rotor 10R. Un peu de fluide est prélevé du circuit principal de la turbomachine par l'ajutage 74 de section constante, et emplit la chambre 72. L'évacuation du fluide hors de cette chambre se fait par un ajutage 76, aménagé entre des surfaces 66 et 68 respectivement de la couronne 61 et de la roue à aubes 22. La surface annulaire 66 s'étend radialement sensiblement en face de la surface annulaire correspondante 68 de la roue à aubes 22. Entre ces deux surfaces est formé un jeu 70. Le jeu 70 varie en fonction de la position axiale du rotor par rapport au stator, de manière à réguler la pression dans la chambre 72 et finalement, la pression de fluide dans la chambre 72 agit (de manière connue) sur la roue à aubes 22 et donc sur le rotor 10R, pour maintenir celui-ci à une position axiale sensiblement constante.

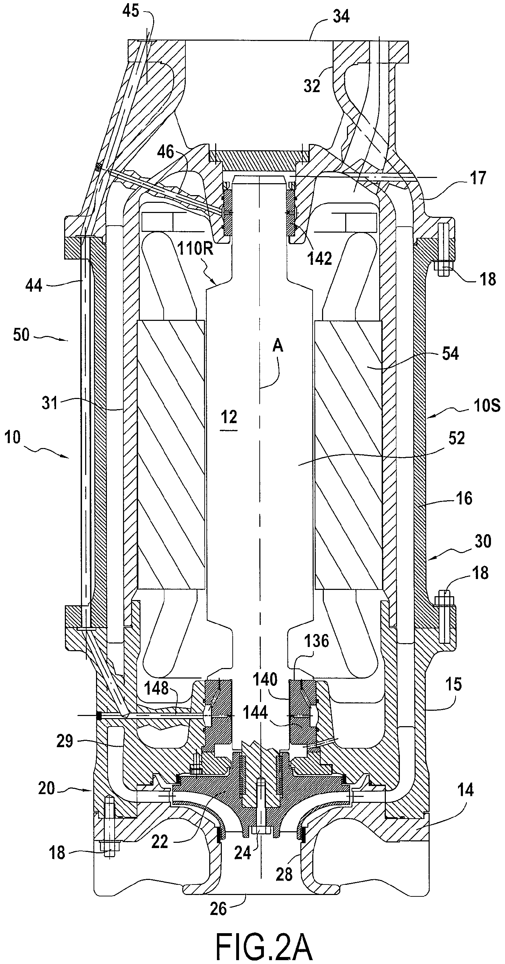

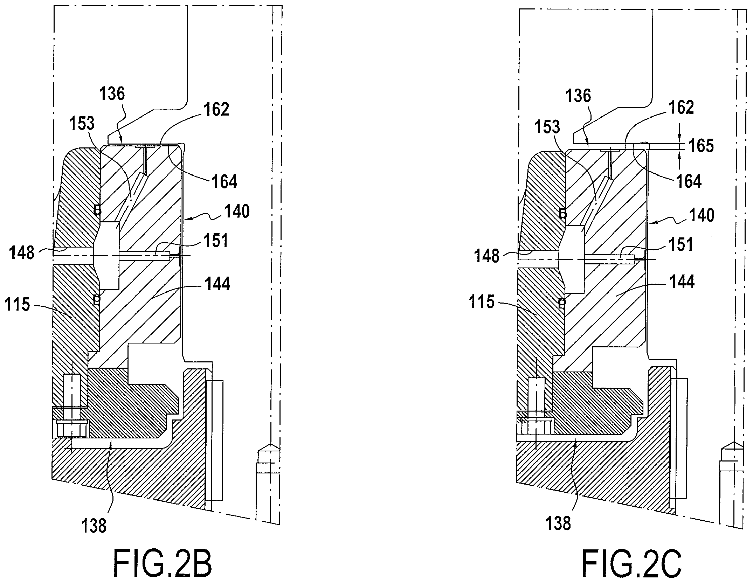

Un second mode de réalisation va être présenté en relation avec les figures 2A, 2B et 2C. La fonction et la structure de la turbomachine présentée par ces figures sont sensiblement identiques à celles de la turbomachine décrite en relation avec les figures 1A à 1C.

Le positionnement radial du rotor 110R est assuré par deux paliers hydrostatiques 140, 142 disposés sensiblement aux extrémités du rotor.

En revanche, les moyens de maintien en position axiale du rotor 110R sont différents du mode de réalisation précédent. Le rotor 110R est soutenu, à l'arrêt et aux faibles vitesses de rotation, par une butée axiale constituée par une butée hydrostatique 136. Cette butée est voisine du palier hydrostatique 140 de maintien en position radiale, de telle sorte qu'avantageusement ces deux composants sont réalisés à l'aide d'une bague commune 144 fixée dans la partie de carter 115. Cependant, les surfaces fonctionnelles des composants 136 et 140 sont des surfaces distinctes, ayant des normales dirigées respectivement axialement et radialement et la butée axiale 136 est distincte du palier hydrostatique 140 de maintien radial.

Grâce à la butée hydrostatique 136, dès qu'une pression de fluide est appliquée à l'orifice 45, le rotor se soulève très légèrement et peut commencer à tourner.

Illustré par les figures 2B et 2C, le fonctionnement de la butée hydrostatique 136, en relation avec le dispositif d'équilibrage axial 38, est très similaire à celui de la turbomachine du mode de réalisation précédent.

Les canalisations 148 convoient un fluide sous pression dans les conduites de répartition 151, 153 qui conduisent le fluide respectivement jusqu'à la butée hydrostatique 136 et au palier hydrostatique 140. Les conduites 148, 151 et 153 sont espacées régulièrement tout au long de la circonférence de la partie de carter 115 et de la bague 144 de manière à répartir le fluide le long de la circonférence.

A l'arrêt et à basse vitesse, le rotor 110R se soulève de la bague 144 sous l'effet de la pression de fluide dans la butée hydrostatique 136, et se positionne au voisinage de la partie supérieure 162 de celle-ci. Un très léger jeu est donc formé entre cette surface 162 et la surface en regard 164 du rotor 110R et évite tout frottement mécanique du rotor 110R sur le stator.

A plus haute vitesse, le dispositif d'équilibrage axial 138 soulève légèrement le rotor (par rapport à sa position d'arrêt ou de vitesse faible), avec l'augmentation du jeu axial 165 entre les surfaces 162 et 164. La butée hydrostatique 136 est alors débrayée, et le maintien en position axiale du rotor 110R est assuré par le seul dispositif d'équilibrage axial 138.

Cet agencement s'avère à la fois très compact, simple, et économique puisque la butée axiale (la butée hydrostatique 136) est en fait réalisée en partie avec les moyens du palier hydrostatique 140.

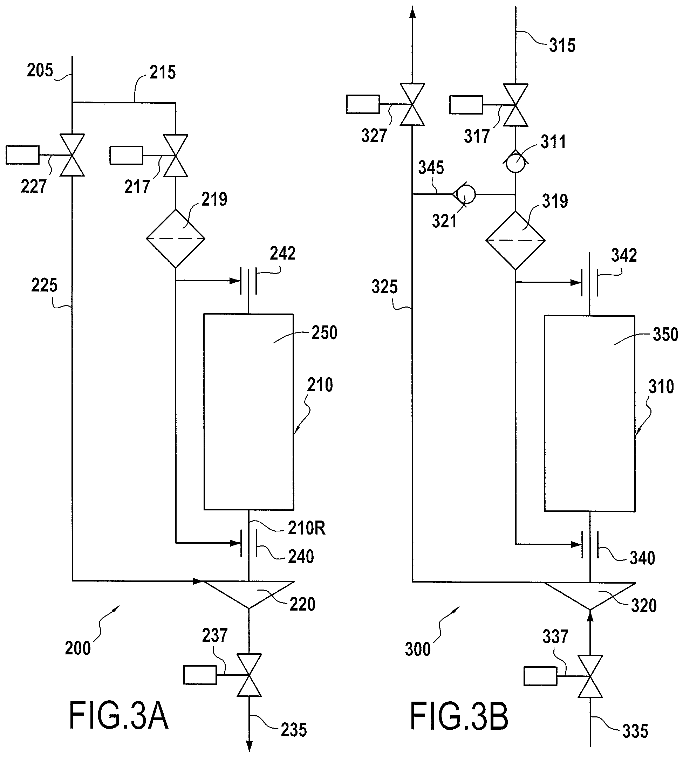

Les figures 3A et 3B présentent deux dispositifs de turbomachine selon l'invention.

Le premier dispositif 200 (figure 3A) inclut une turbomachine 210 qui comporte une génératrice électrique 250 actionnée par une turbine 220. Le rotor 210R de la turbomachine est maintenu en position radiale par deux paliers hydrostatiques 240, 242.

La turbine 220 et les paliers hydrostatiques 240, 242 sont alimentés en fluide sous pression à partir d'une canalisation unique 205.

Une première canalisation 215, dont le débit est contrôlé par une valve 217, est reliée à la canalisation 205 pour alimenter les paliers hydrostatiques via un filtre 219.

Une deuxième canalisation 225 est également reliée à la canalisation 205 pour alimenter la turbine 220. Le passage de fluide à travers la turbine 220 est commandé par deux valves 227 et 237, situées respectivement sur la canalisation 225 en amont et sur la canalisation 235 d'évacuation de fluide en aval de la turbine 220.

La figure 3B présente un dispositif de turbomachine selon l'invention 300, dans le cas où la turbomachine est une pompe électrique. Le dispositif 300 inclut une turbomachine 310 avec un moteur électrique 350, entraînant une pompe 320. Sauf indication différente, les éléments analogues à ceux de la figure 3A sont repris en incrémentant leur référence numérique de 100.

Les paliers hydrostatiques 340, 342 sont alimentés via un filtre 319 par une canalisation 315, apte à être reliée à une source de fluide sous pression (non représentée) extérieure au dispositif de turbomachine 300. Le débit dans cette canalisation est commandé par une valve 317.

La pompe 320 est alimentée via une canalisation 335. Le débit d'alimentation est commandé par une valve 337. Le refoulement de la pompe se fait dans une canalisation 325, dont le débit est commandé par une valve 327.

En outre, une canalisation 345 relie la canalisation 325 à la canalisation 315.

Un clapet anti-retour 321 est disposé sur cette canalisation 345 pour empêcher la remontée du fluide vers la canalisation 325, et un autre clapet anti-retour 311 est disposé sur la canalisation 315 pour empêcher la remontée de fluide vers la source de fluide sous pression (non représentée). Du fait de ces deux clapets, c'est la pression la plus haute, entre la pression de refoulement de la pompe 320 (pression dans la canalisation 325) et la pression de la source du fluide sous pression, qui est appliquée aux paliers hydrostatiques 340,342. Par conséquent, dès que la pression de refoulement de la pompe est suffisante, la consommation de fluide sous pression en provenance de la source extérieure de fluide sous pression est interrompue.

Un autre mode de réalisation consisterait à prévoir un dispositif de bascule commandé, par exemple à l'aide d'une unité de commande électronique, pour sélectionner l'origine de fluide sous pression alimentant les paliers hydrostatiques.

## Revendications

1. Turbomachine (10,210,310) agencée avec un rotor (10R, 110R) et un stator (10S), comportant
une partie fluidique (20) apte à permettre l'échange d'énergie entre un fluide la traversant et le rotor (10R, 110R), comprenant au moins une roue à aubes (22) montée sur un arbre du rotor,
une partie électrique (50,250,350) apte à convertir de l'énergie électrique en travail ou inversement ;
des moyens de positionnement radial (40,42 ;240,242 ;340,342) assurant le positionnement radial du rotor ;
un dispositif d'équilibrage axial sans contact (38), agencé sur ladite roue à aubes, assurant l'équilibrage axial du rotor (10R, 110R) à vitesse élevée ; la turbomachine étant **caractérisée en ce que**
elle comporte en outre une butée axiale (36,136) distincte des moyens de positionnement radial (40,42 ;140,142), assurant l'équilibrage axial du rotor à faible vitesse, et sans contact à vitesse élevée ; et **en ce que** les moyens de positionnement radial sont constitués uniquement par des paliers hydrostatiques, la turbomachine comportant des circuits d'alimentation (44,46,48) des paliers hydrostatiques aptes à relier ces paliers à une source de fluide sous pression.

2. Turbomachine selon la revendication 1, dans laquelle la butée axiale (36,136) comporte des portées formant un angle supérieur à 10° par rapport à l'axe (A) du rotor.

3. Turbomachine selon la revendication 1 ou 2, dans laquelle la butée axiale (136) est une butée hydrostatique.

4. Turbomachine selon la revendication 1 ou 2, dans laquelle la butée axiale (36) est un roulement à billes.

5. Turbomachine selon la revendication 4, dans laquelle le roulement à billes comporte une bague interne (58) présentant une surface radialement intérieure sensiblement cylindrique, et un jeu (56) est formé entre cette surface et une surface extérieure du rotor.

6. Turbomachine selon l'une quelconque des revendications 1 à 5, comportant en outre un filtre (219,319) en amont de l'alimentation des paliers hydrostatiques (240,242;340,342).

7. Turbomachine (310) selon l'une quelconque des revendications 1 à 6, dans laquelle la partie fluidique est une pompe (320), et la partie électrique est un moteur électrique (350).

8. Turbomachine (210) selon l'une quelconque des revendications 1 à 6, dans laquelle la partie fluidique est une turbine (220), et la partie électrique est un générateur électrique (250).

9. Turbomachine selon l'une quelconque des revendications 1 à 8, dans laquelle à vitesse élevée, le dispositif d'équilibrage axial utilise uniquement du fluide traversant la ou les roues à aubes pour assurer le maintien en position axiale du rotor (10R,110R).

10. Turbomachine pour fluide GNL, GPL ou mix-réfrigérant, selon l'une quelconque des revendications 1 à 9.

11. Dispositif de turbomachine comportant une turbomachine selon l'une quelconque des revendications 1 à 10, apte à être reliée à une source de fluide sous pression, et des moyens (311,321,315,345) pour sélectionner pour l'alimentation des paliers hydrostatiques (340,342) de la turbomachine, soit cette source de fluide sous pression, soit un circuit de fluide principal (325,335) de la turbomachine.

## Patentansprüche

1. Turbomaschine (10, 210, 310), die mit einem Rotor (10R, 110R) und einem Stator (10S) eingerichtet ist, umfassend
einen Fluidteil (20), der geeignet ist, den Energieaustausch zwischen einem sie durchströmenden Fluid und dem Rotor (10R, 110R), der wenigstens ein an einer Welle des Rotors angebrachtes Schaufelrad (22) umfasst, zu ermöglichen,
einen Elektroteil (50, 250, 350), der geeignet ist, elektrische Energie in Arbeit umzuwandeln oder umgekehrt,
Mittel zum radialen Positionieren (40, 42; 240, 242; 340, 342), welche die radiale Positionierung des Rotors sicherstellen,
eine Vorrichtung zum berührungslosen axialen Ausgleich (38), die an dem Schaufelrad angeordnet ist, die den axialen Ausgleich des Rotors (10R, 110R) bei hoher Geschwindigkeit sicherstellt,
wobei die Turbomaschine **dadurch gekennzeichnet ist, dass**
sie ferner einen von den Mitteln zum radialen Positionieren (40, 42; 140, 142) getrennten Axialanschlag (36, 136) umfasst, der den axialen Ausgleich des Rotors bei geringer Geschwindigkeit und berührungslos bei hoher Geschwindigkeit sicherstellt, und dass
die Mittel zum radialen Positionieren einzig und allein durch hydrostatische Lager gebildet sind, wobei die Turbomaschine Kreise zur Versorgung (44, 46, 48) der hydrostatischen Lager umfasst, die geeignet sind, diese Lager mit einer Druckfluidquelle zu verbinden.

2. Turbomaschine nach Anspruch 1, bei der der Axialanschlag (36, 136) Auflageflächen, die einen Winkel größer als 10° gegenüber der Achse (A) des Rotors bilden, umfasst.

3. Turbomaschine nach Anspruch 1 oder 2, bei der der Axialanschlag (136) ein hydrostatischer Anschlag ist.

4. Turbomaschine nach Anspruch 1 oder 2, bei der der Axialanschlag (36) ein Kugellager ist.

5. Turbomaschine nach Anspruch 4, bei der das Kugellager einen Innenring (58), der eine im Wesentlichen zylindrische, radial innere Fläche aufweist, umfasst und ein Spiel (56) zwischen dieser Fläche und einer Außenfläche des Rotors gebildet ist.

6. Turbomaschine nach einem der Ansprüche 1 bis 5, die ferner ein Filter (219, 319) vor der Versorgung der hydrostatischen Lager (240, 242; 340, 342) umfasst.

7. Turbomaschine (310) nach einem der Ansprüche 1 bis 6, bei der der Fluidteil eine Pumpe (320) ist und der Elektroteil ein Elektromotor (350) ist.

8. Turbomaschine (210) nach einem der Ansprüche 1 bis 6, bei der der Fluidteil eine Turbine (220) ist und der Elektroteil ein Stromgenerator (250) ist.

9. Turbomaschine nach einem der Ansprüche 1 bis 8, bei der bei hoher Geschwindigkeit die Vorrichtung zum axialen Ausgleich einzig und allein Fluid, das das oder die Schaufelräder durchströmt, verwendet, um das Halten des Rotors (10R, 110R) in axialer Position sicherzustellen.

10. Turbomaschine für LNG-, LPG-Fluid oder Kühlmittelmix, nach einem der Ansprüche 1 bis 9.

11. Turbomaschinenvorrichtung, umfassend eine Turbomaschine nach einem der Ansprüche 1 bis 10, die geeignet ist, mit einer Druckfluidquelle verbunden zu werden, und Mittel (311, 321, 315, 345), um für die Versorgung der hydrostatischen Lager (340, 342) der Turbomaschine entweder diese Druckfluidquelle oder einen Hauptfluidkreis (325, 335) der Turbomaschine auszuwählen.

## Claims

1. A turbomachine (10, 210, 310) arranged with a rotor (10R, 110R) and a stator (10S), the turbomachine comprising:
• a fluid-flow portion (20) enabling energy to be exchanged between a fluid passing therethrough and the rotor (10R, 110R), including at least one bladed wheel (22) mounted on a shaft of the rotor;
• an electrical portion (50, 250, 350) suitable for converting electricity into work or vice versa;
• radial positioning means (40, 42; 240, 242; 340, 342) serving to position the rotor radially; and
• a contactless axial balancing device (38) arranged on said bladed wheel, providing axial balancing for the rotor (10R, 110R) at high speed;
the turbomachine being **characterized in that**:
• it further comprises a thrust bearing (36, 136) distinct from the radial positioning means (40, 42; 140, 142), which thrust bearing provides axial balancing of the rotor at low speed, and is contactless at high speed; and
• the radial positioning means are constituted solely by hydrostatic bearings, the turbomachine including hydrostatic bearing feed circuits (44, 46, 48) suitable for connecting said bearings to a source of fluid under pressure.

2. A turbomachine according to claim 1, wherein the thrust bearing (36, 136) includes bearing surfaces forming an angle of more than 10° relative to the axis (A) of the rotor.

3. A turbomachine according to claim 1 or claim 2, wherein the thrust bearing (136) is a hydrostatic bearing.

4. A turbomachine according to claim 1 or claim 2, wherein the thrust bearing (36) is a ball bearing.

5. A turbomachine according to claim 4, wherein the ball bearing comprises an inner ring (58) having a radially inside surface that is substantially cylindrical, with clearance (56) being formed between said surface and an outside surface of the rotor.

6. A turbomachine according to any one of claims 1 to 5, further including a filter (219, 319) upstream of the feed of the hydrostatic bearings (240, 242; 340, 342).

7. A turbomachine (310) according to any one of claims 1 to 6, wherein the fluid-flow portion is a pump (320), and the electrical portion is an electric motor (350).

8. A turbomachine (210) according to any one of claims 1 to 6, wherein the fluid-flow portion is a turbine (220), and the electrical portion is an electricity generator (250).

9. A turbomachine according to any one of claims 1 to 8, wherein at high speed, the axial balancing device makes use solely of the fluid flowing through the bladed wheel(s) for the purpose of holding the rotor (10R, 110R) axially in position.

10. A turbomachine for LNG, LPG, or refrigerant-mix fluid, according to any one of claims 1 to 9.

11. A turbomachine device comprising both a turbomachine according to any one of claims 1 to 10, suitable for being connected to a source of fluid under pressure, and means (311, 321, 315, 345) for selecting the feed to the hydrostatic bearings (340, 342) of the turbomachine, said feed being either said source of fluid under pressure, or a main fluid circuit (325, 335) of the turbomachine.
